# EUROPÄISCHE PATENTSCHRIFT

(11) **EP 2 409 386 B1**
(45) Veröffentlichungstag und Bekanntmachung des Hinweises auf die Patenterteilung: **07.08.2019**
(21) Anmeldenummer: 10701843.4
(22) Anmeldetag: 21.01.2010
(51) Int. Cl.: H02K 5/14, H01R 39/38

(54) **ELEKTRISCHER ANTRIEBSMOTOR, INSBESONDERE FÜR EIN AGGREGAT IN EINEM KRAFTFAHRZEUG**
ELECTRIC DRIVE MOTOR, IN PARTICULAR FOR A UNIT IN A VEHICLE
MOTEUR D'ENTRAÎNEMENT ÉLECTRIQUE, EN PARTICULIER POUR UN ÉQUIPEMENT DANS UN VÉHICULE AUTOMOBILE

(30) Priorität: 20.03.2009 DE 102009001714
(43) Veröffentlichungstag der Anmeldung: 25.01.2012
(73) Patentinhaber: Robert Bosch GmbH, 70442 Stuttgart (DE)
(72) Erfinder: CZINEGE, Florian, H-1103 Budapest (HU); ANDING, Lars-Dirk, 72202 Nagold (DE)
(86) Internationale Anmeldenummer: PCT/EP2010/050671
(87) Internationale Veröffentlichungsnummer: WO 2010/105867

(56) Entgegenhaltungen:
- EP-A1- 0 851 541
- EP-A1- 1 463 180
- EP-A1- 1 940 010
- EP-A2- 1 037 360
- WO-A1-03/028171
- WO-A1-2004/023609
- WO-A1-2006/067097
- DE-C- 698 701
- FR-A1- 2 554 646
- US-A- 2 532 827

## Beschreibung

Die Erfindung bezieht sich auf einen elektrischen Antriebsmotor, insbesondere für ein Aggregat in einem Kraftfahrzeug wie beispielsweise einen Fensterheber-Antriebsmotor, nach dem Oberbegriff des Anspruches 1.

### Stand der Technik

Aus der DE 100 06 350 A1 ist ein elektrischer Fensterheber-Antriebsmotor bekannt, der in Kraftfahrzeugen eingesetzt wird und als Kommutatormotor mit einem drehfest mit der Rotorwelle umlaufenden Kommutator und darauf aufliegenden Kohlebürsten ausgebildet ist, welche in einem Bürstenträger aufgenommen sind. Der Bürstenträger nimmt außerdem ein Lager für die Rotorwelle auf, das als Kalottenlager ausgebildet ist.

Mit der WO2004/023609 ist eine Bürstenanordnung für eine elektrische Maschine bekannt geworden, bei der auf die Bürsten radial eine Kraft gegen den Kollektor und gleichzeitig eine Kraft in Axialrichtung zur Drehachse ausgeübt wird.

Die EP1463180A1 zeigt einen Kleinmotor bei dem die Motorstromkontakte zum Kommutator durch Schleifkontakte realisiert sind, die mittels Torsionsfedern angedrückt werden.

In der EP0851541A1 ist ein Bürstenhaltersystem offenbart, bei dem eine Torsionsfeder mit einer Drehachse entlang der Rotationsachse angeordnet ist. Dabei übt ein Federschenkel eine radiale und tangentiale Kraft auf die Bürsten aus.
Die FR 2 554 646 A1 zeigt eine elektrische Maschine mit einem Plankommutator, bei dem Kohlefürsten mittels eines Federelements axial auf den Plankommutator gepresst werden.

Mit der US 2 532 827 A ist ein elektrische Maschine bekannt geworden, bei der Kohlebürsten radial gegen einen Kommutator gepresst werden. Dabei drückt ein Federelement zwei Hebel mit drehbaren Rollen radial und tangential gegen die Kohlebürsten.

### Offenbarung der Erfindung

Von diesem Stand der Technik ausgehend liegt der Erfindung die Aufgabe zu Grunde, mit einfachen konstruktiven Maßnahmen ein Kommutierungssystem in einem elektrischen Antriebsmotor mit hoher Betriebssicherheit auszubilden.

Diese Aufgabe wird erfindungsgemäß mit den Merkmalen des Anspruches 1 gelöst. Die Unteransprüche geben zweckmäßige Weiterbildungen an.

Der elektrische Antriebsmotor bzw. die elektrische Maschine wird insbesondere für ein Aggregat bzw. Nebenaggregat in einem Kraftfahrzeug eingesetzt, beispielsweise als Fensterheberantrieb, Sitzversteller oder Schiebedachantrieb. Derartige Antriebsmotoren sind üblicherweise als permanenterregte Gleichstrommotoren ausgebildet, die über ein Kommutatorsystem zur Stromumschalttung verfügen. Das Kommutatorsystem umfasst je nach Poligkeit der Maschine mindestens zwei Kohlebürsten, die an einem drehfest mit der Rotorwelle verbundenen Kommutator anliegen. Beispielsweise sind bei zweipoligen Motoren üblicherweise Nord- und Südpol in einem Winkel von 180° zueinander angeordnet, dementsprechend sind auch die Bürsten diametral gegenüberliegend angeordnet und fest mit dem Motorgehäuse verbunden.

Beim erfindungsgemäßen Antriebsmotor wird jede Kohlebürste von jeweils einem Federelement in Richtung des Kommutators kraftbeaufschlagt, wobei die vom Federelement erzeugte Federkraft eine Komponente radial in Richtung zum Kommutator sowie eine weitere Komponente in Richtung auf ein Bürstenführungsteil aufweist, an dem die Kohlebürste gehalten bzw. angeordnet ist. Dem Federelement kommt somit eine doppelte Funktion zu: Zum einen ist über die Federkraftbeaufschlagung sichergestellt, dass die Kohlebürste an der Mantelfläche des Kommutators anliegt, so dass der elektrische Kontakt dauerhaft gewährleistet ist. Zum andern wird über die zusätzliche Kraftkomponente sichergestellt, dass die Kohlebürste an dem Bürstenführungsteil mit Kraftbeaufschlagung anliegt, so dass eine dauerhaft sichere Halterung und Führung der Kohlebürste an dem Bürstenführungsteil besteht. Das Bürstenführungsteil nimmt hierbei als Reaktionskraft die von dem Federelement ausgehende und von der Kohlebürste übertragene Federkraftkomponente auf, die gegen das Bürstenführungsteil gerichtet ist, so dass diese die Halterung und Führung bewirkende Federkraftkomponente den Kommutator nicht belastet. Erfindungsgemäß verläuft die das Bürstenführungsteil beaufschlagende Kraftkomponente in Richtung der Rotorachse. Damit erhält man ein Kräftesystem, welches von dem Federelement erzeugt wird, mit einer ersten, radial in Richtung des Kommutators verlaufenden Kraftkomponente und einer zweiten, in Richtung der Rotorachse verlaufenden Kraftkomponente. Die radiale Kraftkomponente drückt die Kohlebürste gegen die Mantelfläche des Kommutators, die axiale Kraftkomponente beaufschlagt die Kohlebürste gegen das Bürstenführungsteil.

Die Ausführung weist den weiteren Vorteil einer kompakten Bauweise auf, die einen nur verhältnismäßig kleinen Einbauraum für das Kommutatorsystem erfordert. Damit ist es beispielsweise möglich, zusätzliche elektronische Bauteile zu integrieren, die z.B. zur Entstörung des Antriebes eingesetzt werden.

Gemäß einer vorteilhaften Ausführung ist das Bürstenführungsteil als ein Führungsköcher ausgebildet, in welchen die Kohlebürste eingeschoben werden kann. Der Führungsköcher kann umlaufende Wandungen aufweisen, so dass die eingeschobene Kohlebürste an ihrer äußeren Mantelfläche vollständig von dem Führungsköcher umschlossen ist. Grundsätzlich genügt es aber, als Bürstenführungsbauteil ein Element mit offener Struktur vorzusehen, welches beispielsweise lediglich als Anschlag mit einer Führungsfläche ausgebildet ist, an welcher die Kohlebürste anliegt und gegen das die Kohlebürste von der Kraft des Federelementes gedrückt wird. Hierbei kann es zweckmäßig sein, dass die Kohlebürste und das Bürstenführungsteil korrespondierende Querschnitte aufweisen, zumindest im Bereich der unmittelbar einander zugewandten Außen- bzw. Innenflächen von Kohlebürste und Bürstenführungsteil. So kann es vorteilhaft sein, die Kohlebürste mit einem rechteckförmigen Querschnitt, insbesondere einem quadratischen Querschnitt zu versehen und das Bürstenführungsteil beispielsweise mit einem V-förmigen Querschnitt beliebigen Winkels auszubilden, wobei die beiden Innenseiten der V-Form des Bürstenführungsteils die Anlage- und Führungsflächen für die Kohlebürste bilden.

Für ein erleichtertes Einführen bzw. Entlanggleiten der Kohlebürste an dem Bürstenführungsteil kann es zweckmäßig sein, an der der Kohlebürste zugewandten Seite des Bürstenführungsteils Kontakterhebungen auszubilden, die sich über die Wandseite des Bürstenführungsteils erheben und an denen der Außenmantel der Kohlebürste auf Kontakt anliegt. Hierdurch wird eine verringerte Kontaktfläche zwischen Kohlebürste und Bürstenführungsteil erzielt. Die Kontakterhebungen sind beispielsweise als Kontaktstege ausgebildet, die in Radialrichtung verlaufen.

Als erfindungsgemäße Ausführung wird eine Schenkelfeder verwendet, deren Drehachse quer zur Rotorachse des Rotors des Elektromotors verläuft. Ein Federschenkel der Schenkelfeder liegt an der Kohlebürste auf der dem Kommutator gegenüberliegenden, abgewandten Seite an und drückt die Kohlebürste radial gegen den Kommutator sowie in Achsrichtung gegen das Bürstenführungsteil. Um die zwei zueinander senkrecht stehenden Kraftkomponenten zu realisieren, ist die Schenkelfeder in der Weise ausgebildet bzw. ausgerichtet, dass der betreffende Federschenkel unter einem Winkel zur Rotorachse an der Kohlebürste anliegt. Technisch lässt sich dies beispielsweise dadurch realisieren, dass die dem Kommutator abgewandte Stirnseite der Kohlebürste abgeschrägt ist und/oder eine Führungsnut aufweist, die unter dem entsprechenden Winkel zur Rotorachse geneigt verläuft. Die Führungsnut sorgt zudem für eine sichere Aufnahme des Federschenkels der Schenkelfeder, so dass ein versehentliches Herausrutschen des Federschenkels aus der Führungsnut unter normalen Bedingungen ausgeschlossen ist. Der Winkel, unter dem der Federschenkel bzw. die Nut gegenüber der Rotorachse liegt, beträgt beispielsweise maximal 30°.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung eines Kommutierungssystems eines elektrischen Antriebsmotors mit einem Kommutator und zwei diametral gegenüberliegenden Kohlebürsten, die jeweils von einer Schenkelfeder radial gegen die Kommutatormantelfläche gedrückt werden,
- Fig. 2: das Kommutierungssystem in Seitenansicht mit eingetragenen Kraftpfeilen,
- Fig. 3: einen Schnitt durch eine Kohlebürste, die in einem Führungsköcher aufgenommen ist,
- Fig. 4: eine perspektivische Darstellung eines Bürstenträgersystems mit kalottenförmigen Haltearmen zur Aufnahme und Halterung des Rotors einschließlich des Kommutierungssystems,
- Fig. 5: ein Bürstenträgersystem in einer weiteren Ausführung, in welcher die Bürstenführungsteile, an denen die Kohlebürsten abgestützt sind, ohne Kontakt zu den Haltearmen unmittelbar mit dem Grundkörper des Bürstenträgers verbunden sind,
- Fig. 6: eine perspektivische Darstellung der Kohlebürsten, die mit Entstördrosseln verbunden sind, welche mit elektrischen Kontakten gekoppelt sind, wobei zusätzlich eine elektronische Leiterplatte mit den elektrischen Kontakten verbunden ist,
- Fig. 6a: die Leiterplatte aus Fig. 6 in Einzeldarstellung,
- Fig. 7: eine Fig. 6 vergleichbare Darstellung, jedoch mit zusätzlichen Elektronikbauteilen anstelle einer Leiterplatte.

In den Figuren sind gleiche Bauteile mit gleichen Bezugszeichen versehen.

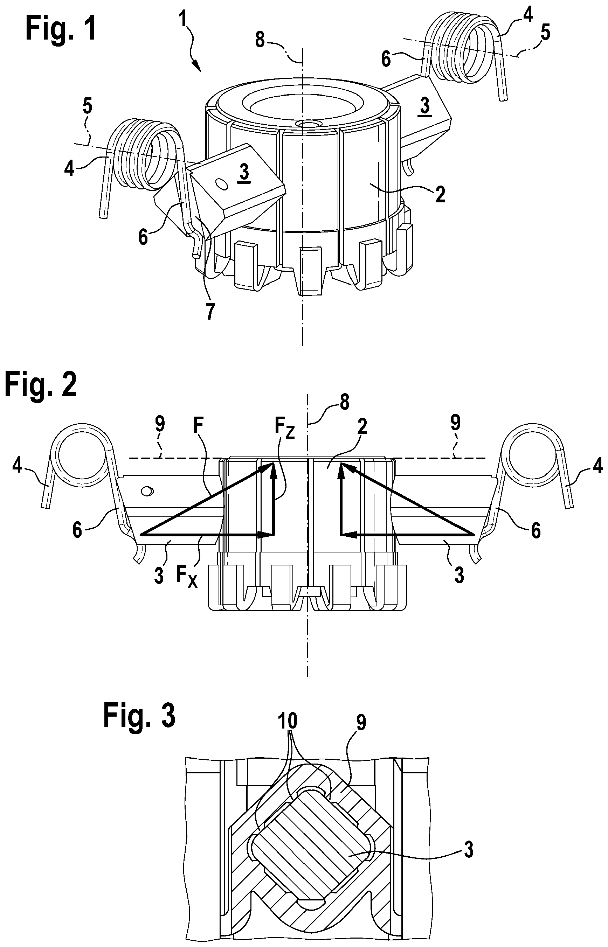

Das in Fig. 1 dargestellte Kommutierungssystem 1 ist Bestandteil eines elektrischen, permanenterregten Gleichstrommotors und umfasst einen Kommutator 2, der drehfest mit der Rotorwelle des Elektromotors verbunden ist und um die Rotorachse 8 rotiert, sowie Kohlebürsten 3, die radial an der äußeren Mantelfläche des Kommutators 2 anliegen und in elektrischem Kontakt mit diesem stehen. Im Ausführungsbeispiel handelt es sich um eine zweipolige Gleichstrommaschine, dementsprechend sind zwei diametral gegenüberliegende Kohlebürsten 3 vorgesehen, die die Mantelfläche des Kommutators an gegenüberliegenden Seiten kontaktieren.

Die Kohlebürsten 3 werden von jeweils einem als Schenkelfeder 4 ausgebildeten Federelement radial in Richtung des Kommutators 2 kraftbeaufschlagt. Die Schenkelfedern 4 sind in der Weise positioniert bzw. ausgerichtet, dass die Federachse 5 der Schenkelfedern quer zur Rotorachse 8 verläuft. Jeweils ein Federschenkel 6 der Schenkelfedern liegt an der dem Kommutator 2 abgewandten Stirnseite der Kohlebürsten an und ist in einer Nut 7 geführt, die in die Stirnseite der Kohlebürsten eingebracht ist. Die Kohlebürsten weisen einen quadratischen Querschnitt auf und sind in Form eines Rhombus angeordnet, derart, dass eine Diagonale durch den Querschnitt der Kohlebürste parallel zur Rotorachse 8 verläuft. Die Nut 7, die in die freie Stirnseite der Kohlebürste eingebracht ist und zur Aufnahme des Federschenkels 6 dient, verläuft ebenfalls in Diagonalrichtung, d.h. parallel zur Rotorachse. Dementsprechend liegt auch der Federschenkel 6, der die Kohlebürste 3 kraftbeaufschlagt, in einer Ebene, die von der Rotorachse 8 sowie einer weiteren Geraden aufgespannt wird, welche sowohl senkrecht zur Rotorachse 8 als auch zur Federachse 5 des Federelementes 4 steht.

Wie der Seitenansicht nach Fig. 2 zu entnehmen, liegt der Federschenkel 6 unter einem Winkel bezogen auf die Rotorachse 8 an der freien Stirnseite der Kohlebürste 3 an. Dieser Winkel beträgt vorzugsweise nicht mehr als 30°. Auch die freie Stirnseite der Kohlebürste 3 weist gegenüber der Rotorachse 8 diesen Winkel auf. Auf Grund dieser Winkellage des Federschenkels 6 bzw. der Stirnseite der Kohlebürste 3 erfolgt die Kraftbeaufschlagung, wie mit den eingetragenen Kraftpfeilen dargestellt, mit einer Komponente Fₓ, die radial nach innen zum Kommutator 2 weist, sowie einer Komponente F_{z}, die in Richtung der Rotorachse 8 weist. Die Komponenten Fₓ und F_{z} setzen sich zusammen zu der resultierenden Kraft F, welche die Kraftwirklinie darstellt, in der die Krafteinleitung von der Schenkelfeder 4 auf die Kohlebürste 3 erfolgt. Auf Grund des verhältnismäßig kleinen Winkels von maximal 30°, unter dem der Federschenkel 6 an der Kohlebürste 3 anliegt und der zugleich den Winkel darstellt, welcher zwischen der resultierenden Kraftkomponente F und der in Radialrichtung weisenden Kraft Fₓ liegt, ist die Radialkomponente Fₓ der Federkraft deutlich größer als die Axialkomponente F_{z}. Die Radialkomponente Fₓ ist radial von außen nach innen gerichtet, die Axialkomponente F_{z} verläuft in der Darstellung gemäß Fig. 2 axial nach oben.

Die Axialkomponente F_{z}, die von der Schenkelfeder 4 erzeugt wird, drückt die Kohlebürste 3 axial gegen ein Bürstenführungsteil 9, welches gehäusefest bzw. fest mit einem Bürstenträger ausgeführt ist und an dem die Kohlebürste 3 angeordnet und geführt ist. Das Bürstenführungsteil 9 nimmt die Kohlebürste 3 formschlüssig auf. Auf diese Weise ist eine sichere Halterung und Führung der Kohlebürste 3 gewährleistet.

In Fig. 3 ist eine Schnittdarstellung durch die Kohlebürste 3 und das Bürstenführungsteil 9 gezeigt. Das Bürstenführungsteil 9 ist als Führungsköcher ausgebildet, in den die Kohlebürste 3 radial eingeschoben ist. Der Innenquerschnitt des Führungsköchers 9 ist an den Querschnitt der Kohlebürste 3 angepasst. Die Innenfläche des Führungsköchers weist Kontakterhebungen 10 auf, die sich über die Innenfläche des Köchers 9 erheben und an denen die äußere Mantelfläche der Kohlebürste 3 anliegt. Auf diese Weise wird eine Verringerung der Kontaktfläche zwischen Kohlebürste 3 und Führungsköcher 9 erzielt, was mit einer Reibungsverringerung und einem erleichterten Einschieben in Radialrichtung einhergeht. Die Kontakterhebungen 10 sind beispielsweise als sich in Radialrichtung erstreckende Kontaktstege ausgebildet.

Die Kohlebürste 3 wird von der Kraft des Federelementes, insbesondere durch die axiale Kraftkomponente gegen die beiden oberen, V-förmig angeordneten Innenflächen des Führungsköchers 9 gedrückt, wodurch sowohl in Achsrichtung nach oben als auch in Querrichtung (in der Darstellung nach Fig. 1 in Richtung der Federachse 5) eine stabile Führung und Halterung der Kohlebürste gegeben ist. Auf Grund der Kraftrichtung der Axialkomponente nach oben ist es grundsätzlich ausreichend, ein Bürstenführungsteil 9 vorzusehen, das keinen umschlossenen Aufnahmeraum für die Kohlebürste besitzt, sondern lediglich eine formschlüssige Abstützung nach oben sowie in Querrichtung gewährleistet. Im Ausführungsbeispiel nach Fig. 3 würde dies bedeuten, dass die obere V-Form des Führungsköchers für die sichere Führung und Halterung der Kohlebürste genügt.

Grundsätzlich ist in dem gezeigten Ausführungsbeispiel auch eine Anordnung der Schenkelfeder 4 in einer um 180° verschwenkten Position möglich, was zur Folge hat, dass die axiale Kraftkomponente nicht nach oben, sondern nach unten weist. Dementsprechend muss das Bürstenführungsteil eine Abstützung axial nach unten gewährleisten.

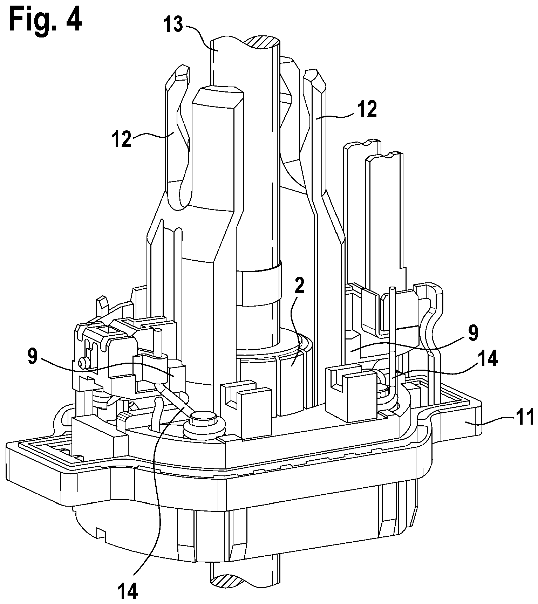

In Fig. 4 ist ein Bürstenträgersystem dargestellt, welches einen Bürstenträger 11 umfasst, der eine Grundplatte bildet, auf der das Kommutierungssystem sowie kalottenförmige Haltearme 12 zur Halterung und Lagerung der Rotorwelle 13 und des Kommutators 2 angeordnet sind. Bestandteil des Kommutierungssystems sind auch die Bürstenführungsteile 9, die im Ausführungsbeispiel gemäß Fig. 4 einteilig mit den Haltearmen 12 ausgebildet sind. Zu erkennen ist außerdem in Fig. 4 eine spulenförmige Entstördrossel 14, die jeweils einer Kohlebürste 3 zur Entstörung des Antriebes zugeordnet ist.

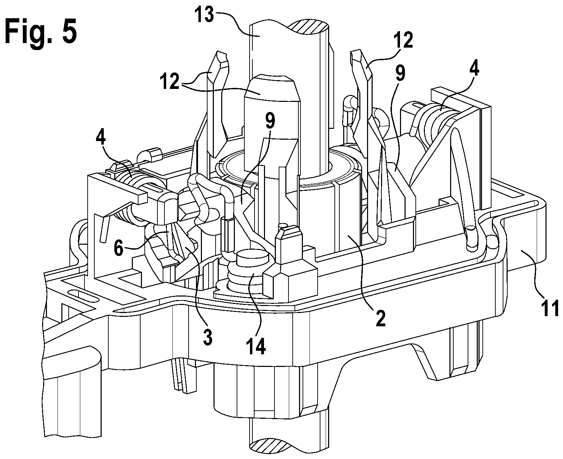

Im Ausführungsbeispiel nach Fig. 5 ist das jeweils einer Kohlebürste zugeordnete Bürstenführungsteil 9 unabhängig von den kalottenförmigen Haltearmen 12 ausgebildet und unmittelbar mit dem Bürstenträger 11 verbunden. Auf diese Weise wird eine Schwingungsentkopplung zwischen dem schwingungsintensiven Bürstenführungssystem und den kalottenförmigen Haltearmen erreicht. Dadurch wird die Übertragung von Bürstenschwingungen auf das Getriebegehäuse vermindert und eine Geräuschreduzierung erzielt.

Dargestellt ist in Fig. 5 auch die Schenkelfeder 4, deren einer Federschenkel 6 die außen liegende Stirnseite der Kohlebürste 3 kraftbeaufschlagt.

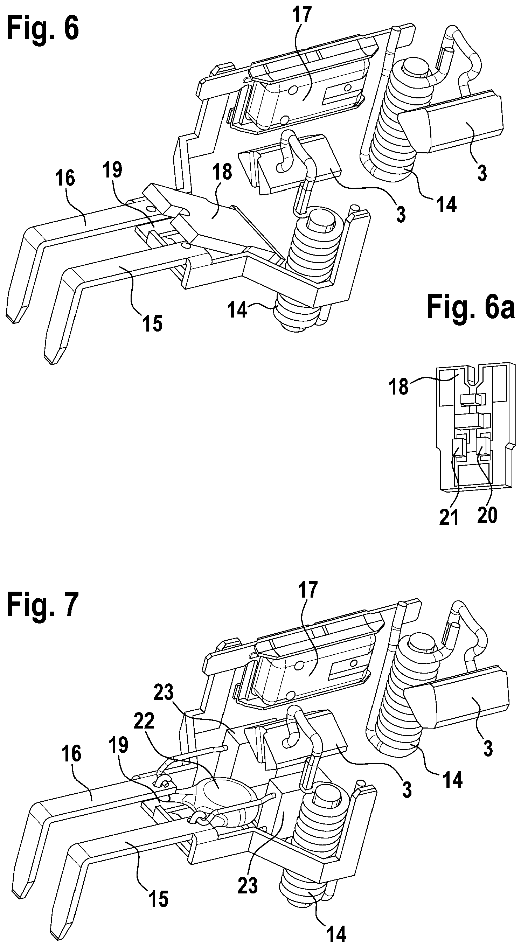

In Fig. 6 sind die Kohlebürsten 3 ohne den Kommutator dargestellt. Die Kohlebürsten 3 sind elektrisch mit den Entstördrosseln 14 verbunden, die mit elektrischen Leitern bzw. Kontakten 15 und 16 verbunden sind. Zwischen einer der Entstördrosseln 14 und dem elektrischen Kontakt 16 befindet sich ein Thermoschalter 17, der im Falle einer unzulässig starken Erwärmung den Stromkreis unterbricht.

Dem Kommutierungssystem ist eine elektronische Leiterplatte 18 zugeordnet, die sich im eingebauten Zustand etwa unterhalb einer der Kohlebürsten 3 befindet und in einer Grundplatte 19 aufgenommen ist. Die elektronische Leiterplatte 18 ist Träger von elektronischen Bauelementen (SMD). Über elektrische Kontakte 20 und 21 (Fig. 6a) ist die Leiterplatte 18 elektrisch mit den Leitern 15 und 16 verbunden.

Das Ausführungsbeispiel gemäß Fig. 7 entspricht weitgehend demjenigen gemäß Fig. 6, jedoch mit dem Unterschied, dass anstelle einer Leiterplatte einzelne elektronische Bauelemente 22, 23, beispielsweise Varistoren, mit den elektrisch leitenden Bahnen 15 und 16 verbunden sind. Die elektronischen Bauelemente 22, 23 befinden sich im montierten Zustand ebenfalls zumindest teilweise unterhalb der Kohlebürsten 3.

## Patentansprüche

1. Elektrischer Antriebsmotor, insbesondere für ein Aggregat in einem Kraftfahrzeug, beispielsweise Fensterheber-Antriebsmotor, mit einer drehbar gelagerten Rotorwelle (13) und mit einem Kommutierungssystem (1), bestehend aus einem drehfest mit der Rotorwelle (13) verbundenen Kommutator (2) und an Bürstenführungsteilen (9) angeordneten Kohlebürsten (3), die am Kommutator (2) anliegen, wobei die Kohlenbürsten (3) radial an der äußeren Mantelfläche des Kommutators (2) anliegen, wobei jede Kohlebürste (3) von einem Federelement (4) in Richtung des Kommutators (2) kraftbeaufschlagt ist, wobei die vom Federelement (4) erzeugte und die Kohlebürste (3) beaufschlagende Federkraft (F) eine Komponente (Fₓ) radial in Richtung des Kommutators (2) und eine Komponente (F_{Z}) in Richtung auf das Bürstenführungsteil (9) aufweist, und das Federelement als Schenkelfeder (4) ausgebildet ist, wobei ein Federschenkel (6) der Schenkelfeder (4) die Kohlebürste (3) kraftbeaufschlagt, und der Federschenkel (6) in einer Nut (7) geführt ist, die in die Kohlebürste (3) eingebracht ist, wobei die Kohlebürste (3) einen eckigen Querschnitt aufweist,
**dadurch gekennzeichnet, dass** die Drehachse (5) der Schenkelfeder (4) quer zur Rotorachse (8) verläuft, und die Komponente (F_{z}) der beaufschlagenden Federkraft (F) in Richtung der Rotorachse (8) verläuft, und die das Bürstenführungsteil (9) beaufschlagende Kraftkomponente (F_{Z}) in Richtung der Rotorachse (8) verläuft, wobei der Federschenkel (6) sowie die Nut (7) in der Kohlebürste (3) mit der Rotorachse (8) einen Winkel einschließen, der maximal 30° beträgt, und eine Querschnittsdiagonale der Kohlebürste (3) in Richtung der Rotorachse (8) verläuft, und die Nut (7), die in der freien Stirnseite der Kohlebürste (3) eingebracht ist und zur Aufnahme des Federschenkels (6) dient, in Diagonalrichtung verläuft.

2. Antriebsmotor nach Anspruch 1, **dadurch gekennzeichnet, dass** das Bürstenführungsteil (9) als Führungsköcher ausgeführt ist, in welchen die Kohlebürste (3) eingeschoben ist.

3. Antriebsmotor nach einem der Ansprüche 1 bis 2, **dadurch gekennzeichnet, dass** die Kohlebürste (3) und das Bürstenführungsteil (9) zumindest teilweise korrespondierende Querschnitte aufweisen.

4. Antriebsmotor nach einem der Ansprüche 1 bis 3, **dadurch gekennzeichnet, dass** die Kohlebürste (3) einen quadratischen Querschnitt aufweist.

5. Antriebsmotor nach einem der Ansprüche 1 bis 4, **dadurch gekennzeichnet, dass** das Bürstenführungsteil (9) auf der der Kohlebürste (3) zugewandten Seite Kontakterhebungen (10) aufweist, insbesondere Kontaktstege, an denen die Außenseite der Kohlebürste (3) auf Kontakt anliegt.

6. Antriebsmotor nach einem der Ansprüche 1 bis 5, **dadurch gekennzeichnet, dass** an einem Bürstenträger (11) Haltearme (12) zur Aufnahme und Halterung des Rotors und des Kommutators (2) angeordnet sind.

7. Antriebsmotor nach Anspruch 6, **dadurch gekennzeichnet, dass** das Bürstenführungsteil (9) ohne Kontakt zu den Haltearmen (12) unmittelbar mit dem Bürstenträger (11) verbunden ist.

## Claims

1. Electric drive motor, in particular for an assembly in a motor vehicle, for example a window winder drive motor, having a rotatably mounted rotor shaft (13) and having a commutation system (1), comprising a commutator (2), which is connected in a rotationally fixed manner to the rotor shaft (13), and carbon brushes (3) which are arranged on brush guiding parts (9) and bear against the commutator (2), wherein the carbon brushes (3) bear radially against the outer lateral surface of the commutator (2), wherein force is applied to each carbon brush (3) in the direction of the commutator (2) by a spring element (4), wherein the spring force (F) which is generated by the spring element (4) and is applied to the carbon brush (3) has one component (F_{X}) radially in the direction of the commutator (2) and one component (Fz) in the direction of the brush guiding part (9), and the spring element is designed as a leg spring (4), wherein a spring leg (6) of the leg spring (4) applies force to the carbon brush (3), and the spring leg (6) is guided in a groove (7) which is made in the carbon brush (3), wherein the carbon brush (3) has an angular cross section,
**characterized in that** the rotation axis (5) of the leg spring (4) runs transversely in relation to the rotor axis (8), and the component (F_{Z}) of the applied spring force (F) runs in the direction of the rotor axis (8), and the force component (F_{Z}) which is applied to the brush guiding part (9) runs in the direction of the rotor axis (8), wherein the leg spring (6) and the groove (7) in the carbon brush (3) form an angle of at most 30° with the rotor axis (8), and a cross section diagonal of the carbon brush (3) runs in the direction of the rotor axis (8), and the groove (7), which is made in the free end side of the carbon brush (3) and serves to receive the spring leg (6), runs in the diagonal direction.

2. Drive motor according to Claim 1, **characterized in that** the brush guiding part (9) is embodied as a guide cartridge into which the carbon brush (3) is inserted.

3. Drive motor according to either of Claims 1 and 2, **characterized in that** the carbon brush (3) and the brush guiding part (9) have at least partially corresponding cross sections.

4. Drive motor according to one of Claims 1 to 3, **characterized in that** the carbon brush (3) has a square cross section.

5. Drive motor according to one of Claims 1 to 4, **characterized in that** the brush guiding part (9) has, on that side which faces the carbon brush (3), raised contact portions (10), in particular contact webs, against which the outer side of the contact brush (3) bears with contact.

6. Drive motor according to one of Claims 1 to 5, **characterized in that** holding arms (12) for receiving and holding the rotor and the commutator (2) are arranged on a brush carrier (11).

7. Drive motor according to Claim 6, **characterized in that** the brush guiding part (9) is directly connected to the brush carrier (11) without contact with the holding arms (12).

## Revendications

1. Moteur d'entraînement électrique, notamment pour un groupe dans un véhicule automobile, par exemple un moteur d'entraînement de lève-vitre, comprenant un arbre de rotor (13) monté rotatif et comprenant un système de commutation (1), composé d'un collecteur (2) relié en rotation solidaire à l'arbre de rotor (13) et de balais de charbon (3) disposés sur des parties de guidage de balais (9) et qui reposent contre le collecteur (2), les balais de charbon (3) reposant dans le sens radial contre l'enveloppe extérieure du collecteur (2), chaque balai de charbon (3) étant soumis à une force par un élément ressort (4) en direction du collecteur (2), la force de ressort (F) produite par l'élément ressort (4) et appliquée au balai de charbon (3) possédant une composante (Fₓ) radiale en direction du collecteur (2) et une composante (F_{Z}) en direction de la partie de guidage de balais (9), et l'élément ressort étant réalisé sous la forme d'un ressort à branches (4), une branche de ressort (6) du ressort à branches (4) soumettant le balai de charbon (3) à une force et la branche de ressort (6) étant guidée dans une rainure (7) qui est pratiquée dans le balai de charbon (3), le balai de charbon (3) possédant une section transversale polygonale,
**caractérisé en ce que** l'axe de rotation (5) du ressort à branches (4) s'étend transversalement par rapport à l'axe de rotor (8) et la composante (F_{Z}) de la force de ressort (F) appliquée s'étend dans la direction de l'axe de rotor (8) et la composante (F_{Z}) de force appliquée à la partie de guidage de balais (9) s'étend dans la direction de l'axe de rotor (8), la branche de ressort (6) ainsi que la rainure (7) dans le balai de charbon (3) formant avec l'axe de rotor (8) un angle qui est au maximum égal à 30°, et une diagonale de section transversale du balai de charbon (3) s'étendant dans la direction de l'axe de rotor (8), et la rainure (7), qui est pratiquée dans le côté frontal libre du balai de charbon (3) et sert à accueillir la branche de ressort (6), s'étendant dans la direction diagonale.

2. Moteur d'entraînement selon la revendication 1, **caractérisé en ce que** la partie de guidage de balais (9) est réalisée sous la forme d'un carquois de guidage dans lequel le balai de charbon (3) est inséré.

3. Moteur d'entraînement selon l'une des revendications 1 et 2, **caractérisé en ce que** le balai de charbon (3) et la partie de guidage de balais (9) présentent des sections transversales au moins partiellement correspondantes.

4. Moteur d'entraînement selon l'une des revendications 1 à 3, **caractérisé en ce que** le balai de charbon (3) présente une section transversale carrée.

5. Moteur d'entraînement selon l'une des revendications 1 à 4, **caractérisé en ce que** la partie de guidage de balais (9) possède, sur le côté qui fait face au balai de charbon (3), des bossages de contact (10), notamment des nervures de contact, contre lesquels repose en contact le côté extérieur du balai de charbon (3).

6. Moteur d'entraînement selon l'une des revendications 1 à 5, **caractérisé en ce que** des bras de maintien (12) destinés à accueillir et à maintenir le rotor et le collecteur (2) sont disposés au niveau d'un porte-balais (11).

7. Moteur d'entraînement selon la revendication 6, **caractérisé en ce que** la partie de guidage de balais (9) est reliée directement au porte-balais (11) sans contact avec les bras de maintien (12).
